Europäisches Patentamt

European Patent Office

Office européen des brevets

(19)

(11) Numéro de publication: **0 012 880 B1**

# FASCICULE DE BREVET EUROPEEN

(12)

(45) Date de publication du fascicule du brevet: **10.08.83**

(21) Numéro de dépôt: **79104873.9**

(22) Date de dépôt: **04.12.79**

(51) Int. Cl.³: **G 11 B 5/09,** G 06 F 11/00, H 03 K 13/00

(54) **Procédé de décodage de données binaires codées en phase, modulation de fréquence et modulation de fréquence modifiée.**

(30) Priorité: **21.12.78 US 971969**

(43) Date de publication de la demande: **09.07.80 Bulletin 80/14**

(45) Mention de la délivrance du brevet: **10.08.83 Bulletin 83/32**

(84) Etats contractants désignés: **DE FR GB**

(56) Documents cités:
**FR - A - 2 201 587
FR - A - 2 204 925
FR - A - 2 286 553
US - A - 3 879 342**

(73) Titulaire: **International Business Machines Corporation
Old Orchard Road
Armonk, N.Y. 10504 (US)**

(72) Inventeur: **Frazier, Giles Roger
11509 Three Oaks Trails
Austin Texas 78759 (US)**

(74) Mandataire: **Siccardi, Louis
COMPAGNIE IBM FRANCE Département de
Propriété Industrielle
F-06610 La Gaude (FR)**

Courier Press, Leamington Spa, England.

## Procédé de décodage de données binaires codées en phase, modulation de fréquence et modulation de fréquence modifiée

### Domaine technique

La présente invention concerne de façon générale le décodage de données binaires codées. Plus particulièrement, elle concerne le décodage de données codées en phase, en odulation de fréquence ou en modulation de fréquence modifiée.

### Etat de la technique antérieure

Le brevet français No. 73 29793 déposé le 9 août 1973 et publié le 26 avril 1974 sous le No. 2 201 587 décrit une technique de codage et de décodage pour données codées en phase, comprenant un procédé de détection de déphasage et/ou de désynchronisation des bits, et de resynchronisation à la suite d'une erreur. Pour définir chaque caractère à bits multiples ou segment de données, un demi-temps de bit supplémentaire est ajouté entre les caractères et codé de façon qu'une inversion de flux correctrice puisse apparaître à T/2 (T étant égal au temps de bit intra-caractère normal) et qu'une transition entre caractères ne puisse pas apparaître à un temps T après la dernière transition de données du caractère. Pour le décodage, des fenêtres sont établies selon une vitesse de données nominale prédéterminée et la chronologie de ces fenêtres est resynchronisée à chaque transition de données, mais non aux transitions de flux correctrices qui apparaissent entre des bits de données de même valeur binaire. Si le dernier bit d'un caractère est de valeur opposée au premier bit du caractère immédiatement suivant, aucune transition-inversion de flux correctrice n'est nécessaire entre ces caractères et un temps de bit et demi s'écoule entre toutes les transitions de codage. En supposant que ce codage soit enregistré sur un milieu magnétique, un décalage des bits apparaît quelquefois dans la région qui présente deux transitions séparées par un temps de bit et demi, étant donné qu'une propriété inhérente à l'enregistrement magnétique est que quelfois des transitions de flux substantiellement séparées se rapprochent l'une de l'autre sur le milieu magnétique. Pendant le décodage de cette configuration de transitions de flux, les transitions peuvent ne pas être alignées avec les fenêtres désignées pour le décodage et en conséquence, des erreurs seront indiquées. De plus, un temps de bit et demi s'écoule avant la resynchronisation de la logique de détection avec les transitions lues sur le milieu d'enrigistrement.

Dans la machine à écrire à mémoire IBM, une technique de codage en phase d'enregistrements magnétiques légèrement modifiée par rapport à celle décrite ci-dessus, comprend une transition de flux à un demi-temps de bit après le dernier bit de données de chaque caractère et une autre transition de flux à un temps de bit et demi après le dernier bit de données de chaque caractère. La première transition de flux de bit de donnée du caractère suivant apparaît à deux temps de bit et demi après la dernière transition de bit de donnée du caractère précédent. Si le dernier bit de donnée d'un caractère a le même valeur binaire que le premier bit de donnée du caractère suivant, une transition de flux corectrice apparaît deux temps de bit après la dernière transition de donnée du caractère précédent. Ainsi, un temps de bit est le temps maximum entre les transitions de flux, ce qui réduit substantiellement le taux d'erreur dû au décalage de bits décrit ci-dessus, mais étant donné que la resynchronisation du circuit d'horloge qui génère les fenêtres pour le décodage n'apparaît qu'aux instants des transitions de données et qu'à la transition se produisant un temps de bit et demi après le dernier bit d'un segment de données, un temps de bit et demi s'écoule toujours entre chaque caractère, période de temps pendant laquelle le circuit d'horloge de détection n'est pas restauré. De ce fait, les variations de la vitesse du milieu d'enregistrement apparaissant entre les caractères sont tout aussi susceptibles d'entraîner des erreurs.

On pratique dans l'art antérieur le réajustement des circuits d'horloge analogiques à chaque transition. Cependant, les techniques analogiques utilisent des oscillateurs à fréquence, variable qui ne se synchronisent pas aussi rapidement, ou sur une plage aussi étendue, que cela serait souvent nécessaire dans des dispositifs d'entrainement bon marché dans lesquels la vitesse du milieu peut varier rapidement. De plus, les composant analogiques sont généralement trop chers et trop encombrants pour être d'une utilisation avantageuse dans des systèmes bon marche.

On connaît dans l'art antérieur des réalisations logiques purement numériques qui se resynchronisent à chaque transition de flux, et ce, pour quelques codes spécialisés de longueur fixe et de longueur variable. Cependant, ces codes spécialisés utilisent souvent davantage d'espace sur un milieu magnétique pour une séquence de données binaires déterminée que les codes efficaces utilisés ici et leur utilisation n'est donc pas désirable. Le code ratio-métrique décrit par Joel A. Kramer dans le revue EDN, p. 75 et 81 (5 mai 1978) est un exemple de code de ce type. Les codes de longueur variable également, ne sont pas aussi avantageux que les codes de longueur fixe utilisés ici car les caractéristiques physiques du milieu requises pour l'enregistrement d'un bloc de données codées en code de longueur variable, sont imprévisibles et un espace plus important est requis pour enregistrer les données de cette manière étant donné qu'un espace suffisant doit être réservé sur le milieu pour le plus mauvais cas d'un pourcentage relativement élevé de caractères "longs". Les techniques de décodage de l'art antérieur ont souvent requis la séparation des caractères dans le courant des données au moyen d'intervalles relativement importants entre des transitions qui sont susceptibles d'être affectées par un décalage des bits. De tels intervalles inter-caractères ne sont pas requis par les procédés de décodage décrits ici.

Il sera donc très avantageux d'utiliser une technique numérique très efficace pour resynchroniser la logique d'horloge de décodage à chaque transition dans un code compact, de longueur fixe, ce qui donerait une plage des tolérances de vitesse plus étendue à une milieu magnétique par rapport à une tête de lecture et d'enregistrement. Il sera aussi avantageux que cette technique offre la possibilité de séparer des données en caractères sans intervalles importants entre transitions, permette de resynchroniser la logique d'horloge avec une perte maximale d'un caractère et offre la possibilité d'une adaptation à une gamme importante de vitesses de données tout en offrant une densité de bits élevée en raison de la longueur fixe du code.

Exposé de l'invention

En conséquence, la présente invention a pour objet un procédé de décodage de données binaires codées en phase, modulation de fréquence et modulation de fréquence modifiée, qui permet d'élargir la plage des tolérances de vitesse pendant le décodage de ces données, par rapport à la plage de tolérances de vitesse dans les procédés de décodage de l'art antérieur indiqués plus haut et ce, grâce à l'amélioration de la resynchronisation de la logique de décodage.

Selon l'invention, le procédé de décodage de données binaires à partir d'une séquence de transitions d'un signal, représentant lesdites données, ainsi que des informations d'horloge, codées en phase (PE) ou modulation de fréquence (FM), respectivement, et dans laquelle séquence l'intervalle de temps séparant deux impulsions consécutives est soit long soit court, est caractérisé en ce qu'il comporte les étapes qui consistent à:

detecter l'apparition de chaque transition du signal,

engendrer une première impulsion en réponse seulement à chaque détection d'un intervalle de temps long entre deux transitions du signal,

engendrer un signal indiquant la détection d'une transition de données ou d'une transition d'horloge, respectivement, en réponse à l'apparition de deux premières impulsions consécutives et en l'absence de toute transition du signal entre lesdites deux premières impulsions,

engrendrer un signal indiquant la détection d'une transition de données ou d'une transition d'horloge, respectivement, en réponse à l'apparition de deux premières impulsions séparées par un nombre pair de transitions du signal,

engendrer un signal indiquant la détection d'une transition de donnée ou d'une transition d'horloge, respectivement, en réponse à l'apparition d'un nombre pair de transitions du signal, faisant suite à la transition de donnée ou d'horloge précédente, et en l'absence de ladite première impulsion pendant l'intervalle de temps entre ladite transition de données ou d'horloge précédente et la dernière transition dudit nombre pair de transitions.

Des caractéristiques additionnelles du procédé selon l'invention consistent à engendrer ladite première impulsion lorsque l'intervalle de temps séparant deux transitions consécutives est égal ou supérieur à un temps de référence ou lorsque cet intervalle de temps est au moins égal aux 3/2 de l'intervalle de temps entre la première de ces deux transitions consécutives et la transition qui la précède immédiatement, lorsque ce dernier intervalle de temps est court.

Dans le cas de données codées en modulation de fréquence un "0", représentant la valeur de la donnée décodée, est délivré en réponse à la détection d'une transition et à la présence d'une première impulsion au niveau haut si aucune autre transition n'a été détectée ou si un nombre pair de transitions ont été détectées depuis la fin de la première impulsion antérieurement engendrée. Un "1", est engendré en réponse à la détection d'une transition, si un nombre impair de transitions additionnelles ont été détectées depuis la fin du niveau haut de la plus récente première impulsion.

Une plage de tolérances de vitesse plus étendue que celle permise par les techniques de l'art anterieur est assurée par la présente invention en raison du fait que le circuit d'horloge qui distingue les impulsions longues des impulsions courtes, est restauré à chque transition de flux, qu'elle soit correctrice, inter-caractères out de données, et non seulement aux transitions de données. Ainsi, le temps maximum pouvant s'écouler entre les restaurations du circuit d'horloge est de un temps de bit alors qu'il était de un temps de bit et demi pour les techniques de l'art antérieur.

Pour le code MFM (modulation de fréquence modifiée) pour lequel il y a trois valeurs possibles de l'intervalle de temps entre deux impulsions consécutives (long, moyen, et court), le procédé de décodage selon l'invention est caractérisé en ce qu'il comporte les étapes qui consistent à

détecter l'apparition de chaque transition du signal,

engendrer une première impulsion en réponse seulement à chaque détection d'une intervalle de temps long entre deux desdites transitions,

engendrer une deuxième impulsion en réponse seulement à la détection d'un intervalle de temps moyen entre deux desdites transitions,

engendrer un troisième signal indiquant la détection d'une transition, lorsqu'un nombre pair de deuxièmes impulsions a été engendré depuis la première impulsion précédemment engendrée,

engendrer un quatrième signal en réponse à la détection d'un intervalle de temps court entre les transitions ou d'une deuxième impulsion, lorsqu'un nombre impair de deuxièmes impulsions ont été engendrées depuis la première impulsion précédemment engendrée,

délivrer un "1", représentant la valeur de la donnée décodée, en réponse audit troisième signal lorsque la transition faisant suite audit troisième signal apparaît au cours d'un intervalle de temps court après ledit troisième signal,

délivrer un "0", représentant la valeur de la donnée décodée, en réponse audit troisième signal, lorsqu'une deuxième impulsion suit ledit troisième signal,

délivrer un "0" suivi d'un "1", représentant les valeurs des données décodées, en réponse audit troisième signal, lorsqu' une première impulsion suit ledit troisième signal,

délivrer un "0", représentant la valeur de la donnée décodée, en réponse audit quatrième signal, lorsque la transition qui suit ledit quatrième signal apparaît au cours d'un intervalle de temps court après ledit quatrième signal et

délivrer un "0" suivi d'un "1", représentant les valeurs des données décodées, en réponse audit quatrième signal, lorsqu' une seconde impulsion suit le quatrième signal.

La logique de l'horloge distinguant les intervalles de temps longs, des moyens et courts dans une réalisation décrite, compare la longueur de temps s'écoulant entre les transitions à un temps de référence prédéterminé pour une impulsion longue. Ainsi, on suppose que la vitesse à laquelle le code doit être lu pour des opérations de décodage, est maintenue à une valeur nominale à l'intérieur d'une plage de tolérances donnée. Cependant, dans une autre réalisation de la présente invention décrite, l'intervalle de temps s'écoulant entre les impulsions d'entrée n'est pas comparé à un temps de référence prédéterminé mais comparé à la durée caractéristique (longue, moyenne ou courte) de l'intervalle précédent. Ainsi, une plage de tolérances de vitesses encore plus étendue est assurée par l'application de cette technique par comparaison à l'autre réalisation précédemment décrite de la présente invention, en raison du fiat qu'il n'est pas nécessaire que la durée des intervalles soit comparable à une valeur nominale. Si la durée des intervalles varie relativement lentement par comparaison à un temps de bit, même sur une plage étendue, aucune erreur n'apparaîtra au décodage du code.

Brève description des figures des dessins

La figure 1 est un schéma block illustrant la structure de décodage et de détection d'erreurs dans des données enregistrées par application des techniques de codage en phase ou en modulation de fréquence.

Les figures 2 et 5 sont des représentations schématiques de deux réalisations préférées d'un circuit logique assurant la division impulsions longues/impulsions courtes.

La figure 3 est une représentation schématique de l'unité interprétative du circuit de décodage de la présente invention.

La figure 5 est une représentation chronologique du fonctionnement des circuits longiques des figures 2, 3 et 5.

La figure 6 est une représentation schématique de la partie division du circuit de décodage du code MFM.

La figure 7 est une représentation schématique de l'unité interprétative du circuit de décodage du code MFM.

Description détaillée de modes de réalisations préférées

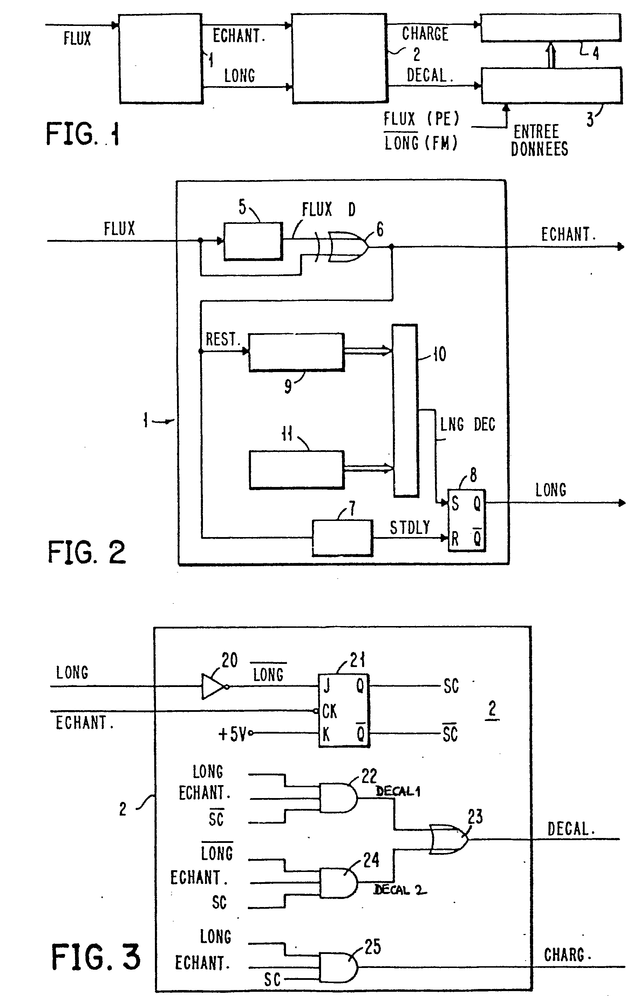

En se reportant à la figure 1, on voit que des changements de flux, soit positifs, soit négatifs, sont appliqués à une unité de séparation impulsions longues/impulsions courtes 1 par une ligne FLUX. Cette unité de séparation 1 a pour fonction de délivrer une sortie d'échantillonnage par la ligne ECHANT. à chaque transition de flux et une sortie positive sur la ligne LONG lorsqu'un temps nominalement long a été détecté entre les transitions. Les sorties ECHANT. et LONG sont appliquées à une unité interprétative 2 qui a pour fonction de provoquer le chargement des bits de données décodés dans un registre à décalage 3, par la ligne DECAL., lorsqu'ils sont détectés, et de détecter la fin d'un caractère complet ou d'une séquence de bits de données, pour que le caractère soit transféré du registre de décalage 3 à un registre de sortie 4 en réponse à un signal positif sur la ligne CHARG. Le signal de la ligne FLUX est aussi appliqué au registre de décalage 3.

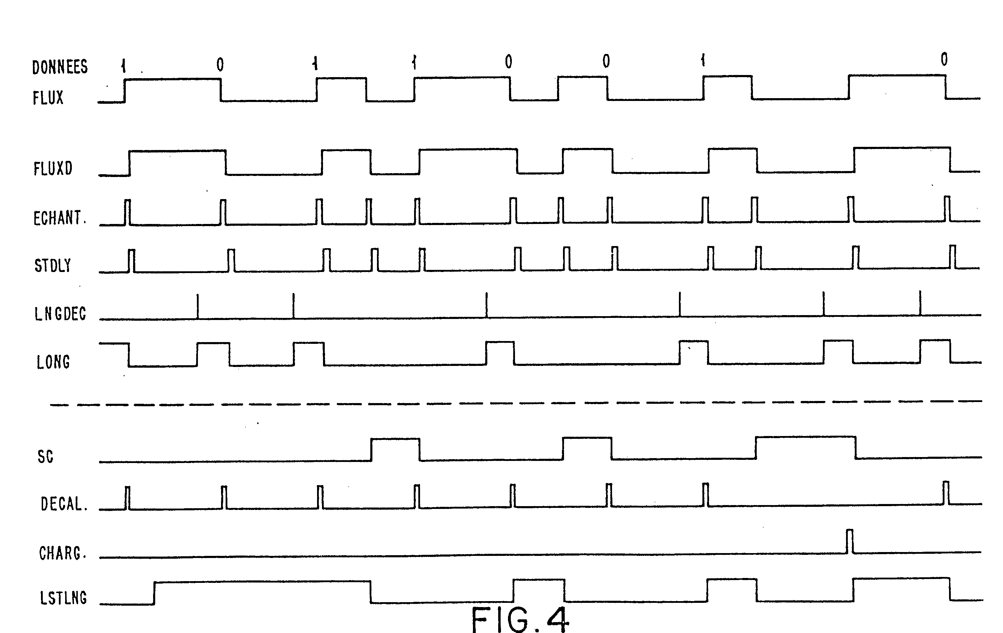

La figure 2 est un schéma logique d'une réalisation préférée de l'unité de séparation 1. Il sera également utile de se reporter au diagramme chronologique de la figure 4 lors de la description de la figure 2. Dans la figure 2, le signal de flux issu d'un circuit de lecture magnétique est appliqué à un circuit à retard 5 et à un circuit OU exclusif 6 par la ligne FLUX. Le circuit de retard 5 délivre une impulsion retardée FLUXD au OU exclusif 6. Ceci provoque la génération d'une impulsion d'échantillonnage relativement courte à la suite de chaque changement de flux et celle-ci est délivrée en sortie du circuit par la ligne ECHANT. L'impulsion d'échantillonnage est appliquée à une entrée de restauration REST. d'un compteur chronologique 9 et aussi, au travers d'un circuit à retard 7, à l'entrée de

**0 012 880**

restauration R d'une bascule bistable 8, par une ligne STDLY. En se reportant à la figure 4, on voit que les circuits à retard 5 et 7 sont du type répondant à un signal d'entrée avec un retard fixe. Ainsi, les circuits à retard 5 et 7 passent au niveau positif et reviennent à zéro à un temps fixe après le passage au niveau positif et le retour à zéro des signaux sur les lignes FLUX et ECHANT.

Le compte du compteur 9 est appliqué à une entrée d'un comparateur 10. Le compte atteint lorsqu'une période nominale longue (par opposition à une période courte) apparaît entre les transitions de flux, est appliqué par un compteur 11 à l'autre entrée du comparateur 10. Le compteur de chronologie 9 compte continuellement pendant le fonctionnement du circuit mais est restauré à zéro à chaque impulsion d'échantillonnage. Si le compteur 9 compte jusqu'à un compte égal au compte long emmagasiné dans le compteur 11, le comparateur 10 délivre une sortie positive sur sa ligne LNGDEC qui est appliquée à l'entrée d'enclenchement 5 de la bascule 8. L'enclenchement de la bascule 8 permet l'application d'un signal positif sur la sortie LONG de celle-ci. La bascule 8 est restaurée par le signal positif de la ligne STDLY issu du circuit à retard 7.

Ainsi, lorsqu'une longue période entre transitions est détectée, un signal positif est délivré sur la ligne LONG et ce signal demeure positif jusqu'à la restauration de la bascule 8 par un signal positif sur la ligne STDLY faisant suit à l'impulsion d'échantillonnage suivante.

La figure 3 est un schéma logique de l'unité interprétative 2 de la figure 1. Le signal de la ligne ECHANT. est appliqué à l'entrée horloge CK d'une bascule J—K, 21. Le signal de la ligne LONG est inversé par l'inverseur 20 afin d'obtenir un signal $\overline{LONG}$ lequel est appliqué à l'entrée J de la bascule 21. Une tension positive, par exemple 5 volts, est continuellement appliquée à l'entrée K de la bascule 21. Le signal SC sur la sortie Q de la bascule 21 est appliqué à une entrée des portes ET 24 et 25 tandis que le signal $\overline{SC}$ de la sortie $\overline{Q}$ de la bascule 21 est appliqué à une entrée d'une porte ET 22. Le signal de la ligne LONG est appliqué aux entrées des portes ET 22 et 25 tandis que le signal $\overline{LONG}$ est appliqué à une entrée de la porte ET 24. Le signal de la ligne ECHANT. est appliqué à chacune des portes, ET 22, 24 et 25. Les sorties des portes ET 22 et 24 sont appliquées aux entrées d'un circuit OU 23.

On décrira maintenant le fonctionnement du circuit d'interprétation 2 en fonction de la table de vérité bien connue pour la bascule J—K:

| J | K | $Q_{n+1}$ |
|---|---|---|
| 0 | 0 | $Q_n$ |
| 0 | 1 | 0 |
| 1 | 0 | 1 |
| 1 | 1 | $\overline{Q}_n$ |

Avec une entrée positive continue à l'entrée K de la bascule 21, ce sont seulement deux des quatre caractéristiques possibles de la bascule J—K qui sont utilisées. Supposons maintenant qu'une impulsion d'échantillonnage soit appliquée à la bascule 21 lorsqu'un signal positif est présent sur la ligne LONG. Un "0" est donc présent à l'entrée J de la bascule 21 et la sortie Q passe à "0" à la chute de l'impulsion d'échantillonnage. La sortie Q étant à "0", la sortie $\overline{Q}$ devient positive et le signal positif sur la ligne $\overline{SC}$ est appliqué à une entrée de la porte ET 22 tandis que le niveau "0" sur la ligne SC est appliqué aux entrées des portes 24 et 25. Pendant l'impulsion d'échantillonnage, une sortie est présente sur la ligne DECAL. si SC=0 avant l'impulsion d'échantillonnage ou une sortie est présente sur la ligne CHARG. si SC=1 avant l'impulsion d'échantillonnage.

Supposons qu'à l'impulsion d'échantillonnage suivante, un signal positif soit à nouveau présent sur la ligne LONG. A cet instant, la porte ET 22 délivre une sortie positive qui est appliquée au circuit OU 23 pour délivrer un signal de sortie positif sur la ligne DECAL. qui est appliqué au registre de décalage 3. Ce signal sur la ligne DECAL. décale le niveau de flux immédiatement après la transition terminant l'impulsion longue, dans le registre de décalage 3, sous la forme d'un bit de donnée.

Supposons maintenant qu'une impulsion courte soit détectée, ce qui provoque le passage au niveau bas de la ligne LONG. Ce niveau bas est inversé par l'inverseur 20 pour délivrer un signal positif sur la ligne $\overline{LONG}$ qui est raccordée à l'entrée J de la bascule 21. Au bord avant de l'impulsion d'échantillonnage suivante, aucun signal n'est transféré au travers d'aucune des trois portes ET étant donné qu'aucune d'elles n'a toutes ses entrées positives. Au bord arrière de cette impulsion de découpage suivante, la bascule 21 change d'état selon la table de vérité indiquée précédemment lorsque les deux entrées recoivent des signaux positifs. Ainsi, un niveau positif est délivré à la sortie Q de la bascule 21 qui est appliqué par la ligne SC aux entrées ET 24 et 25. Dans ce cas, un nombre impair d'impulsions courtes est apparu depuis la dernière impulsion longue si bien que la transition terminant l'impulsion courte n'est pas une transition de données.

Donc, ni la ligne de décalage DECAL., ni la ligne de charge CHARG. ne portent des signaux positifs.

Supposons que l'impulsion suivante soit également courte. Au signal d'échantillonnage suivant, la porte ET 24 délivre un niveau positif sur la ligne DECAL. pour provoquer le décalage des bits de données suivant dans le registre à décalage. Au bord arrière de cette impulsion d'échantillonnage, les niveaux aux sorties de la bascule 21 sont inversés si bien que la sortie Q est à nouveau passée à un niveau bas et que la sortie $\overline{Q}$ est à nouveau positive.

Supposons que l'impulsion suivante soit une impulsion longue. Au bord avant du signal d'échantillonnage suivant, la porte ET 22 délivre un signal positif qui est transféré au travers de la porte OU 23 pour délivrer une impulsion de décalage au registre à décalage 3. En se reportant au signal FLUX de la figure 4, on voit qu'il en devient négatif à cet instant et que le bit de donnée décalé dans le registre de décalage 3 est un "0". Au bord arrière de ce signal d'échantillonnage la sortie Q de la bascule 21 demeure au niveau bas, ce qui permet à la sortie Q̄ de celle-ci de délivrer un signal positif.

Supposons que l'impulsion suivante soit une impulsion longue. Au bord avant du signal d'échantillonnage suivant, la porte ET 22 délivre un signal positif qui est transféré au travers de la porte OU 23 pour délivrer une impulsion de décalage au registre à décalage 3. En se reportant au signal FLUX de la figure 4, on voit qu'il en devient négatif à cet instant et que le bit de donnée décalé dans le registre de décalage 3 est un "0". Au bord arrière de ce signal d'échantillonnage la sortie Q de la bascule 21 demeure au niveau bas, ce qui permet à la sortie Q̄ de celle-ci de délivrer un signal positif.

Supposons maintenant que la durée de l'impulsion suivante soit courte. A l'impulsion d'échantillonnage suivante, aucune sortie n'est délivrée par les portes ET et la bascule 21 change d'état au bord arrière de cette impulsion d'échantillonnage.

Supposons que l'impulsion suivante soit également courte. Au signal d'échantillonnage suivant, la porte ET 24 délivre une sortie positive qui est transférée au travers de la porte OU 23 pour délivrer une impulsion de décalage au registre de décalage 3. En se reportant au signal FLUX de la figure 4, on voit que la transition de flux négative délivre à cet instant un autre bit de donnée "0" au registre de décalage 3 et que la transition de flux précédente était une inversion de flux correctrice. Au bord arrière de cette impulsion de découpage, les états des sorties de la bascule 21 sont inversés et la sortie Q̄ délivre un signal positif tandis que la sortie Q délivre un niveau bas.

Supposons maintenant que la durée de l'impulsion suivante soit longue. A l'impulsion d'échantillonnage suivante, la porte ET 22 délivre une sortie positive qui est transférée au traverse de la porte OU 23 pour appliquer un niveau positif à la ligne DECAL. qui est délivré au registre à décalage 3. En se reportant au signal FLUX de la figure 4, on voit que la transition positive délivre à cet instant un bit "1" au registre à décalage 3. Au bord arrière de cette impulsion d'échantillonnage, les états des sorties de la bascule 21 demeurent inchangés.

Supposons que la durée de l'impulsion suivante soit courte. A l'impulsion d'échantillonnage suivante, aucune des portes ET ne délivre de sortie et au bord arrière de cette impulsion d'échantillonnage, les états des sorties de la bascule 21 sont inversés pour délivrer un signal positif sur la ligne SC et un niveau bas sur la ligne S̄C̄.

Si la durée de l'impulsion suivante est longue, une sortie positive sera délivrée par la porte ET 25 et appliquée par la ligne CHARG. au registre de sortie 4, ce qui provoque le transfert du contenu du registre à décalage 3 dans le registre de sortie 4 est indique qu'un caractère complet a été décodé.

L'homme de l'art appréciera que l'une des caractéristiques par lesquelles la technique de la présente invention diffère de celle présentée dans le document FR—A—2 201 587 cité précédemment, est qu'aucun compteur de bits n'y est utilisé. Lorsque l'on rencontre le cas d'une durée d'impulsion longue suivie par un nombre impair d'impulsions courtes, la fin du caractère a été atteinte par définition. Donc, en utilisant le procédé de la présente invention, des données peuvent être détectées dans les cas où les caractères ont des nombres de bits variables.

Dans l'unité de séparation impulsions longues/impulsions courtes de la figure 2, le compteur de chronologie 9 est restauré à chaque transition de flux. En utilisant la technique de codage appliquée dans la machine à écrire à mémoire IBM indiquée précédemment, les transitions apparaissent avec une séparation n'excédant pas un temps de bit. Cependant, que ce soit avec la technique de décodage de la machine à écrire à mémoire IBM ou avec la technique présentée dans le brevet français cité précédemment, la logique de chronologie de l'art antérieur n'est restaurée qu'aux transitions de données ou inter-caractères pouvant être séparées par un intervalle de temps allant jusqu'à un temps de bit et demi. Ainsi, la technique de la présente invention permet d'étendre la plage de tolérances de vitesse inhérente d'au moins 33% en raison du fait que pendant trois demi-temps de bit, il peut se produire 33% d'erreurs de chronologie de plus que pendant un temps de bit.

La technique de décodage de données indiquée ci-dessus a été décrite telle qu'appliquée au décodage de données codées en mode PE, tel que décrit dans le brevet français cité précédemment. Cependant, si l'entrée de données au registre à décalage 3 de la figure 1 est passée de FLUX à L̄O̅N̅G̅, l'unité de décodage décodera des données codées en mode FM au lieu de données codées en mode PE avec tous les avantages indiqués ci-dessus et la même plage de tolérances de vitesse qu'en code PE. Aucune autre modification du circuit n'est nécessaire et les marqueurs inter-caractères sont toujours reconnaissables par un nombre impair d'impulsions courtes suivis par une impulsion longue.

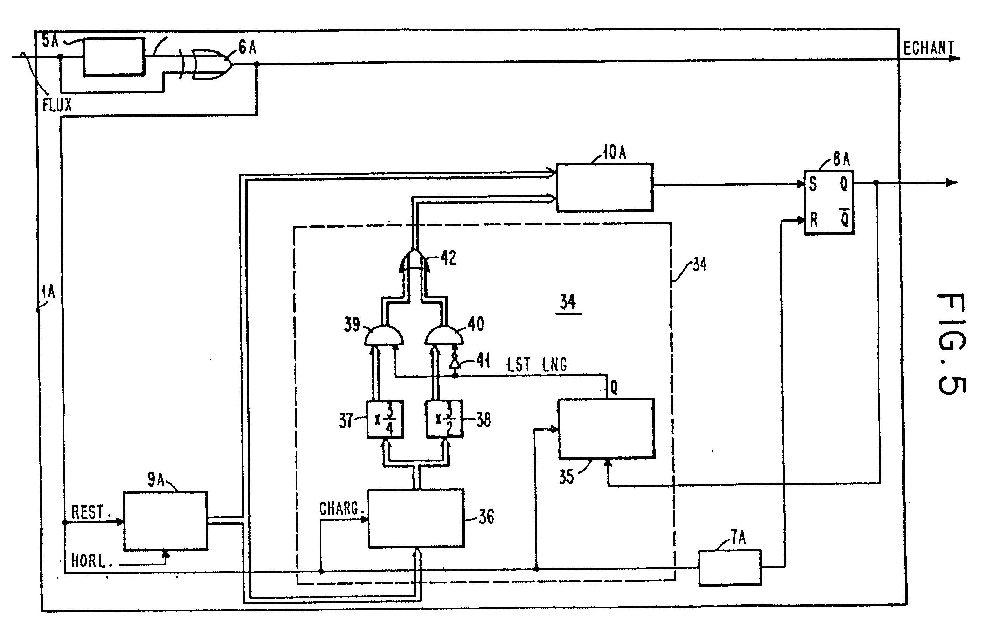

En utilisant l'unité de séparation d'impulsions longues/impulsions courtes 1A de la figure 5 à la place de l'unité de séparation 1 de la figure 1, la plage de tolérances de vitesse est encore plus étendue à la fois pour les codes FM et PE.

La différence entre l'unité .de séparation 1A de la figure 5 et celle de la figure 1 réside dans le fait que la référence de compte long envoyée au comparateur 10A du circuit de la figure 5 est, pour chaque transition, fonction de la durée de l'impulsion précédente au lieu d'être une référence absolue. Dans la figure 5, les composants logiques dont le numéro de référence est affecté du suffice A (par exemple 5A, 6A, etc...) onto la même fonction que les éléments correspondants de la figure 2 dont le numéro de référence ne comporte pas de suffixe. La différence entre les circuits des figures 1 et 2 réside dans la logique de détermination de compte long 34 représentée dans le bloc en tirets de la figure 5. A chaque impulsion d'échantillonnage, le type de la transition précédente (c'est-à-dire longue ou courte) est chargée dans la bascule D, 35, et le compte le plus élevé obtenu du compteur de chronologie 9A immédiatement avant l'impulsion d'échantillonnage, est chargé dans le registre de longueur de la transition précédente 36. Des unités de multiplication 37 et 38 délivrent des nombres correspondant aux 3/4 et aux 3/2 du compte correspondant à la longueur de la transition précédente, respectivement, lesquels comptes sont appliqués aux entrées de portes ET 39 et 40, respectivement. Si l'impulsion précédente était une impulsion longue, la sortie Q de la bascule 35 sera alors positive et le compte du multiplicateur 37 sera transféré au travers de la porte ET 39 et d'un circuit OU 42 à l'entrée de compte long du comparateur 10A. Ainsi, si l'impulsion suivante a une durée égale au moins aux trois quarts de celle de l'impulsion immédiatement précédente qui a été déterminée comme étant une impulsion longue, l'impulsion suivante sera, de la même manière, classée comme une impulsion longue.

Si la transition précédente consistait en une impulsion courte, la sortie Q de la bascule 35 sera alors au niveau bas et l'inverseur 41 inversera ce niveau bas sur la ligne LSTLNG pour permettre à la porte ET 40 de transférer le compte du multiplicateur 38 par le circuit OU 42 à l'entrée de compte long du comparateur 10A. Ainsi, une impulsion suivant immédiatement une impulsion courte sera considérée comme une impulsion longue si elle à au moins, une durée égale aux trois demi de la durée d'une impulsion courte.

On comprendra donc que dans la mesure où les variations de la vitesse de lecture des données codées sont relativement faibles la vitesse peut varier dans une plage importante pendant un intervalle de temps important. Ceci est dû au fait que les impulsions ne sont plus référencées par rapport à la longueur prédéterminée d'une impulsion longue, mais au contraire, chaque durée d'impulsion est comparée à la durée de l'impulsion précédente. Cette technique permet d'enregistrer et de lire des données à différentes vitesses et permet la lecture des données avec des dispositifs d'entraînement de milieu magnétique bon marché dont les vitesses peuvent varier rapidement sur une plage. très importante. Elle permet également à la même logique de décodage de décoder des données de densité variable sur le même dispositif d'entraînement sans réglage de la vitesse d'entraînement ou de toute autre paramètre étant donné que la logique s'adaptera automatiquement à la cadence des données entrantes.

On a montré qu'une modification très mineure du schéma de la figure 1 permet au circuit de décoder les signaux FM au lieu de signaux PE. Avec un nombre d'additions relativement simples au circuit, le système peut également décoder les signaux codés selon le procédé bien connu de la modulation de fréquence modifiée (MFM). On decrira maintenant les modifications qui permettront le décodage des signaux MFM.

A la place d'une ligne unique entre le séparateur données longues/données courtes 1 et l'unité d'interprétation 2 (voir figure 1) pour spécifier la longueur de la transition, (comme c'était le cas pour les codes PE et FM), deux lignes sont nécessaires pour spécifier la longueur du changement FLUX pour le code MFM. Les duex lignes sont nécessaires car il y a trois longueurs de transition possibles en code MFM (que l'on appellera ici impulsions "courtes", "moyennes" et "longues"), tandis qu'il n'y a que deux longueurs en code PE et FM. De plus, tandis que la ligne FLUX ou $\overline{LONG}$ était utilisée pour une entrée de données au registre de décalage 3 des codes PE et FM, respectivement, un autre signal, généré dans l'unité d'interprétation et qui sera décrit plus en détail ultérieurement, doit être utilisé comme une entrée de données au registre à décalage 3 pour le code MFM.

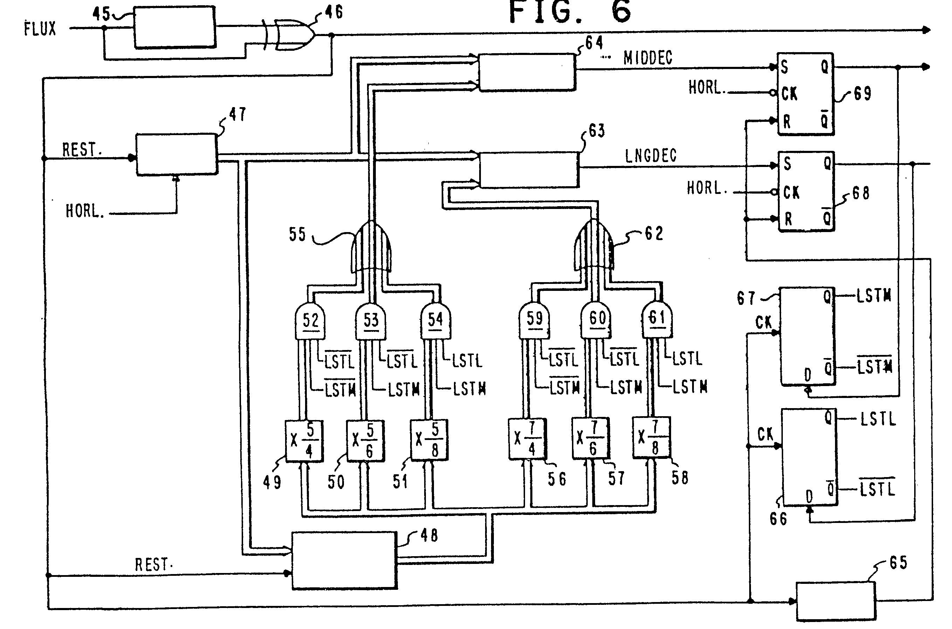

On se référera maintenant à la figure 6 qui est une représentation schématique d'une unité de séparation de données codées en mode MFM. On peut voir que le séparateur de la figure 6 est similaire à celui de la figure 5. Les éléments 5A, 6A, 7A et 9A de la figure 5 sont similaires aux éléments 45, 46, 65 et 47, respectivement, de la figure 6. De plus, la bascule R—S 8A de la figure 5 a été remplacée par deux bascules R—S principale et tributaire synchronisées 68 et 69 dans la figure 6 et le comparateur 10A a été remplacé par deux comparateurs 63 et 64. La logique de détermination de compte long 34 dans le bloc en tirets de la figure 5 a été aussi modifiée par le fait que la bascule 35 a été remplacée par deux bascules 66 et 67, que le réseau multiplicateur 37—42 a été remplacé par le réseau plus complexe 49—62. Les deux comparateurs 63 et 64 sont nécessaires pour assurer la distinction entre les impulsions longues moyennes et courtes du code MFM et le réseau multiplicateur a pour fonction de délivrer aux deux comparateurs des nombres correspondant au nombre des comptes qui doivent apparaître à la fois pour les impulsions moyennes et les impulsions longues plutôt que juste pour le nombre de comptes apparaissant pour une impulsion longue comme cela était nécessaire pour la réalisation de la figure 5. On notera que la sortie du comparateur 64 excite la bascule 69 et conditionne la ligne de sortie MID (impulsions MOYENNES) à une valeur positive. D'une manière similaire, la sortie du comparateur 63 excite la bascule 68 et conditionne la ligne de sortie LONG (impulsions LONGUES) à une valeur positive. Donc, la détection des impulsions courtes est indiquée par le fait que ni la ligne MID, ni la ligne LONG n'est excitée lors d'une transition.

La détection d'une impulsion moyenne est indiquée par un signal positif sur la sortie MID et le déconditionnement de la ligne LONG lors d'une transition. Une impulsion longue est indiquée par un signal positif sur les sorties MID et LONG lors d'une transition. Etant donné que les bascules 67 et 66 échantillonnent les lignes MID et LONG juste avant l'apparition de chaque transition, leur état indique le type (c'est-à-dire long, moyen on court) de la longueur de la transition précédente et leurs lignes de sortie sont utilisées pour la détermination des fenêtres de chronologie appropriées par le réseau multiplicateur 49—62.

Comme indiqué précédemment, le réseau multiplicateur a pour fonction de fournir des nombres correspondant aux nombres de comptes nécessaires pour des impulsions moyennes et longues et, afin d'améliorer la plage de tolérances des vitesses et de bénéficier d'autres avantages, ces nombres sont basés sur la durée et le type (long, moyen ou court) de l'impulsion immédiatement précédente plutôt que sur des références de temps absolues. On notera que les portes 52—55 délivrent au comparateur 64 (qui conditionne la ligne MIDDEC qui, à son tour, conditionne la ligne de sortie MID) un nombre de comptes correspondant aux 5/4, aux 5/6 au aux 5/8 de la longueur de l'impulsion précédente, selon que cette dernière est respectivement courte, moyenne ou longue. D'une manière similaire, on notera que les portes 59—62 délivrent au comparateur 63 (qui excite la ligne LNGDEC qui à son tour, excite la ligne de sortie LONG) un nombre de comptes correspondant aux 7/4, aux 7/6 ou aux 7/8 de la longueur de l'impulsion précédente, selon que cette dernière est respectivement courte, moyenne ou longue. Ainsi, on peut voir par exemple, que si la longueur de la transition de flux précédente consistait en une impulsion courte, le signal LSTL est alors égal à zéro, le signal LSTM est égal à zéro et les portes ET à trois entrées 52 et 59 de l'unité de multiplication, transfèrent des nombres de comptes correspondant aux 5/4 et aux 7/4 des longueurs des impulsions précédentes, au comparateur 64 et 63, respectivement. (Le signal LSTL indique l'excitation de la ligne LONG par la dernière impulsion tandis que le signal LSTM indique l'excitation de la ligne MID par la dernière impulsion). Ainsi, si la longueur de la transition de flux présente est inférieure aux 5/4 de la longueur de la transition de flux précédente, ni la ligne MIDDEC, ni la ligne LNGDEC ne sont excitées et ne conditionneront le signal MID ou le signal LONG. Si la longueur de la transition de flux présente est aux moins égale aux 5/4 et inférieure aux 7/4 de la longueur de la transition de flux précédente, la ligne MIDDEC sera excitée mais non la ligne LNGDEC, ce qui conditionne le signal MID mais non le signal LONG. Si la longueur de la transition de flux présente est au moins égale aux 7/4 de la longueur de la transition de flux précédente, les deux lignes MIDDEC et LNGDEC sont actives, ce qui conditionne les deux lignes MID et LONG. Des états analogues apparaissent dans les cas de transitions de flux précédentes qui consistent en impulsions moyennes et en impulsions longues. Tous les cas possibles et les valeurs de sortie qui en résultent sont résumés dans le tableau ci-dessous dans lequel R est le rapport existant entre la longueur de la transition de flux présente et la longueur de la transition de flux précédente.

| TABLEAU | | | |
|---|---|---|---|
| LSTM=0 Courte: LSTL=0 | LSTM=1 Moyenne: LSTL=0 | LSTM=1 Longue: LSTL=1 | L'impulsion présente est: |
| $R<5/4$ | $R<5/6$ | $R<5/8$ | Courte: LONG=0 MIS=0 |
| $5/4 \leq R < 7/4$ | $5/4 \leq R < 7/6$ | $5/8 \leq R < 7/8$ | Moyenne: LONG=0 MID=1 |
| $7/4 \leq R$ | $7/6 \leq R$ | $7/8 \leq R$ | Longue: LONG=1 MID=1 |

Ainsi, chaque longueur de transition entrante, est comparée à la longueur de la transition immédiatement précédente afin de déterminer si elle est courte, moyenne ou longue, et aucune référence absolue n'est nécessaire. Une analyse du tableau donné ci-dessus indique que si une longueur d'impulsion quelconque est décodée de façon erronée, la logique se resynchronisera automatiquement et commencera à nouveau un décodage correct après une séquence d'entrée composée d'une impulsion longue ou moyenne suivie par une impulsion courte.

L'homme de l'art reconnaîtra qu'il est possible d'apporter de nombreuses variantes à la logique de la figure 6 pouvant rendre sa mise en oeuvre plus facile. Une simplification possible du circuit pourrait consister à combiner les unités de multiplication 49 et 51 en un multiplicateur 5/4 et en un simple circuit de division par deux. Une combinaison similaire peut être faite avec les unités de multiplication 56 et 58.

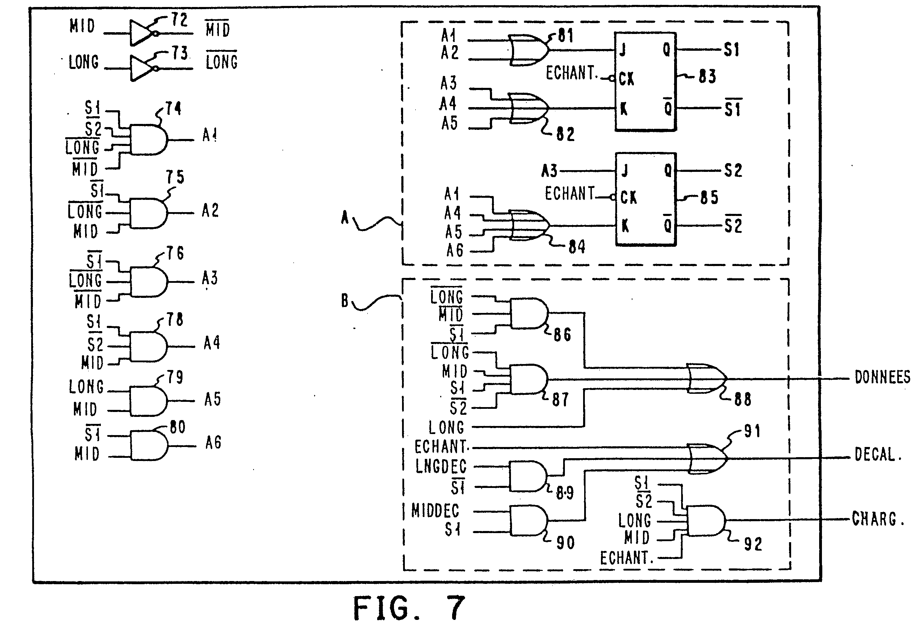

La figure 7 est une représentation schématique d'une réalisation possible d'une unité d'interprétation MFM. Comme pour les codes PE et FM, l'unité d'interprétation a pour fonction de traduire la séquence des longueurs de transitions de flux en bits de données binaires. L'unité d'interprétation de la figure 7 peut être considérée comme un prolongement de l'unité d'interprétation de la figure 3 par le fait que les bascules 83 et 85 et les portes OU 81, 82 et 84 représentées à l'intérieur du bloc A de la figure 7 ont remplacé la bascule 21 de la figure 3. Les circuits représentés dans le bloc B de la figure 7 remplacent le réseau logique 22—25 de la figure 3. Un circuit supplémentaire 72—80 est également nécessaire pour générer les signaux destinés aux portes OU 81, 82 et 84 du block A. Les signaux d'entrée extérieurs LONG, MID, LNGDEC et MIDDEC sont délivrés par le séparateur de la figure 6. La sortie d'un nouveau bit de données est indiqué par une impulsion de sortie sur la ligne ECHANT. et la valeur binaire du bit de données est indiquée par le niveau de la ligne DONNEES au bord avant de l'impulsion ECHANT. La porte ET 92 délivre l'impulsion de chargement CHARG. lorsqu'une séquence d'impulsions longues, courtes et moyennes a été détectée et correspond à une séquence d'impulsions non valides pour le codage MFM. Ainsi, toute séquence d'impulsions MFM non valide peut être codée dans le courant des données afin de générer les impulsions de chargement et de séparer ainsi les données en segments de longueur arbitraire, ou bien l'impulsion de chargement peut être simplement ignorée ou utilisée comme indicateur d'erreur. On notera cependant, que la dernière impulsion de décalage doit être ignorée dans certains cas avec le mode de réalisation particulier représenté dans la figure, si l'impulsion de chargement est utilisée pour la séparation des données.

Le fonctionnement de l'unité d'interprétation sera mieux compris en notant que les niveaux des sorties des bascules 83 et 85 sont gouvernés par la séquence des longueurs des transitions de flux précédentes. Ces sorties sont alors utilisées, avec la longueur de transition de flux actuelle telle qu'indiquée par les lignes LONG et MID, par le réseau ET/OU 86—88 pour établir le niveau de la ligne de sortie DONNEES. De cette façon, le niveau binaire de la donnée de sortie est déterminé, comme indiqué précédemment, non seulement par le rapport existant entre la longueur de la transition de flux actuelle et la longueur de la transition de flux immédiatement précédente qui est indiquée par les lignes MID et LONG, mais également par la séquence des types de transitions de flux précédentes (c'est-à-dire la séquence d'impulsions longues, moyennes et courtes), telle qu'indiquée par les signaux S1 et S2. Le réseau ET/OU 89—91 génère une impulsion de décalage DECAL. à chaque transition de flux, comme indiquée par le signal ECHANT., et à certains instants pendant des impulsions longues et moyennes, selon le niveau du signal S1 délivré par la bascule 83.

Afin de comprendre comment sont déterminés les niveaux des bascules S1 et S2, on notera qu'après toute impulsion longue, les lignes d'entrée LONG et MID sont actives, ce qui fait délivrer le signal A5 par la porte ET 79. Le signal A5 restaure les bascules 83 et 85, au travers des portes OU 82 et 84, respectivement, ce qui établit S1 et S2 à zéro. Si une impulsion moyenne apparaît après cette impulsion longue, les portes ET 75 et 80 deviennent actives, et délivrent les signaux A2 et A6, lesquels enclenchent la bascule 83 et restaurent la bascule 85 au travers des portes OU 81 et 84, respectivement. Si une autre impulsion moyenne apparaît, la porte ET 78 émet le signal A4, lequel restaure les bascules 83 et 85 par l'intermédiaire des portes OU 82 et 84, respectivement. De plus, on notera que si un nombre quelconque d'impulsions courtes est apparu entre les deux impulsions moyennes mentionnées ci-dessus, la porte ET 74 aura été active, délivrant ainsi le signal A1. Le signal A1 étant appliqué à l'entrée d'enclenchement J de la bascule 83 et à l'entrée de restauration K de la bascule 85 au travers des portes 81 et 84, respectivement, a laissé les deux bascules à leur état précédent. Ainsi, on peut voir que les états des bascules 83 et 85 sont au niveau zéro après toute impulsion longue ou après une impulsion moyenne accompagnée d'une séquence quelconque composée d'un nombre pair d'impulsions moyennes apparaissant depuis la dernière impulsion longue, indépendament de toute impulsion courte intermédiaire.

On notera également que si après l'impulsion longue ou le nombre entier d'impulsions moyennes indiqué ci-dessus, une impulsion courte apparaît plutôt qu'une impulsion moyenne, la porte ET 76 devient active et délivre le signal A3. Le signal A3, à son tour, restaure la bascule 83 au travers de la porte OU 82 et enclenche la bascule 85. N'importe quel nombre suivant d'impulsions courtes consécutives provoque à nouveau l'emission du signal A3, ce qui a pour effet de réappliquer les mêmes entrées aux bascules 83 et 85, laissant la bascule 83 restaurée et la bascule 85 enclenchée. Ainsi, on voit maintenant qu'après toute impulsion courte, les états des bascules 83 et 85 sont "0" et "1", respectivement, si aucune ou un nombre pair d'impulsions moyennes est apparu depuis la dernière impulsion longue. Cependant, si une impulsion moyenne apparaît après l'une des impulsions courtes indiquées ci-dessus, les portes ET 75 et 80 deviennent actives, délivrant les signaux A2 et A6 qui, à leur tour, enclenchen la bascule 83 et restaurent la bascule 85 au travers des portes OU 81 et 84, respectivement. Toute séquence ultérieure d'impulsions courtes consécutives conditionnera la porte ET 74, ce qui aura pour effet de réappliquer les mêmes entrées aux bascules 83 et 85, laissant la bascule 83 enclenchée et la bascule 85 restaurée. On peut voir que les niveaux de sortie des bascules 83 et 85 sont maintenant les mêmes qu'ils auraient été si une impulsion moyenne unique ou un nombre impair d'impulsions moyennes était apparu après une impulsion longue, ce cas ayant été expliqué précédemment. Ainsi, on voit que les états des bascules 83 et 85 sont à "1" et à "0", respectivement, après toute impulsion moyenne ou courte apparaissant dans le cas où un nombre impair d'impulsions moyennes est apparu depuis la dernière impulsion longue, indépendament de tout nombre d'impulsions courtes intermédiaires.

En se reportant maintenant un block B, on peut voir que le niveau de la ligne DONNEES est toujours à "1" pendant l'apparition de toute impulsion longue en raison fu fait que le signal LONG est appliqué à la porte OU 88. Si le signal S1 est égal à zéro, ceci signifie que la bascule 83 est restaurée et d'après l'explication précédente, ceci signifie également soit que l'impulsion précédente était une impulsion longue, soit qu'un nombre pair d'impulsions moyennes est apparu depuis la dernière impulsion longue ou que ce sont seulement des impulsions courtes qui sont apparues depuis la dernière impulsion longue. Dans n'importe lequel de ces cas, la porte ET 86 est conditionnée pendant le temps où une impulsion courte peut apparaître et la ligne DONNEES est également conditionnée pendant ce temps par l'intermédiaire de la porte OU 88. Finalement, si S1 et S2 sont à 1 et 0, respectivement, (ce qui signifie que les sorties des bascules 83 et 85 sont à 1 et à 0, respectivement), la porte ET 87 est alors conditionnée pendant le temps ou une impulsion moyenne peut apparaître et la ligne DONNEES est également conditionnée pendant ce temps par l'intermédiaire de la porte OU 88.

La porte OU 91 délivre une sortie DECAL. pour indiquer à un registre à décalage extérieur que celui-ci doit échantilloner la ligne DONNEES dans l'une quelconque des trois conditions suivantes: tout d'abord, toute impulsion d'échantillonnage ECHANT. est transférée par la porte OU 91 pour délivrer une impulsion de décalage DECAL. lors de toute transition de flux. Puis le signal LNGDEC qui, dans la figure 6, est une impulsion ayant pour effet de conditionner le signal LONG au niveau haut et qui apparaît ainsi à la fin d'une période où une transition d'impulsion moyenne aurait pu apparaître, est également transféré par la porte ET 89 à la porte OU 91 si S1 est égal à zéro. Enfin, le signal MIDDEC qui, dans la figure 6, en une impulsion ayant pour effet de conditionner le signal MID au niveau haut et qui ainsi apparaît à la fin de la période où une impulsion courte aurait pu apparaître, est atransféré d'une manière similaire par la porte ET 90 à la porte OU 91 si S1 est égal à 1. Les impulsions de décalage DECAL. supplémentaires apparaissant entre les transitions, lors de certaines impulsions LNGDEC et MIDDEC, outre celles apparaissant à chaque transition, lors de chaque impulsion ECHANT., sont nécessaires aud codage MFM en raison du fait que les configurations de données MFM, contrairement à celles des codes FM ou PE, peuvent présenter plus d'un bit par transition de flux.

Pour compléter cette description, on notera que dans la réalisation décrite ci-dessus, le bord avant de chaque impulsion de décalage DECAL. indique qu'un nouveau bit de donnée doit être décalé de la ligne DONNEES dans un registre à décalage extérieur. Ceci est dû au fait que la ligne DONNEES peut changer d'état au bord arrière d'une impulsion DECAL. mais elle est toujours stable au bord avant de celle-ci. De plus, on notera que d'autres réalisations du circuit d'interprétation sont possibles en utilisant les techniques bien connues pour la conception de circuits logiques. Par example, ces techniques bien connues peuvent être utilisées pour simplifier et/ou pour regrouper certains des éléments logiques de la figure 7. Cependant, toutes les réalisations assureront le même fonction de traduction de longueurs d'impulsions en bits de données en maintenant le suivi de la séquence des longueurs des impulsions précédentes comme indiqué précédement.

Le procédé de décodage à plage de vitesses étendue pour codes de longueur fixe a été décrit ci-dessus en fonction de données codées dans des systèmes d'enregistrement magnétique dans lesquels la vitesse relative entre la tête et le milieu magnétique n'est pas nécessairement constante. Cependant, les procédés de décodage de la présente invention peuvent également être appliqués à n'importe quel système de communication ou d'emmagasinage de données dans lequel la vitesse des données peut varier. De tels systèmes de communication comprennent les systèmes de transmission par fil, par radio ou optique et les systèmes d'emmagasinage de données comprennent les systèmes d'emmagasinage optique. En outre, l'application des techniques présentées ici est utile dans les systèmes à horloge imprécise dont les fréquences peuvent varier sur une plage relativement étendu. On peut constater cela dans l'exemple précédent du code PE en notant que le rapport existant entre le nombre des impulsions d'horloge apparaissant entre deux transitions et le nombre des impulsions apparaissant entre les deux transitions immédiatement suivantes est peu affecté par fréquence d'horloge données variant lentement.

On notera également que la technique de décodage décrite ci-dessus permet la réalisation d'une unité de décodage à plage de vitesses étendue par l'utilisation de composants entièrement numériques qui peuvent être fabriqués sur une même pastille de silicium. Les procédés actuels assurent le bénéfice d'une certaine plage de vitesses grâce à l'utilisation d'oscillateurs à fréquence variable. Mais ces derniers ne sont généralement pas compatibles avec le plage de vitesses étendue de la présente invention, ne permettent généralement pas la cadence des variations de vitesse permise par la présente invention et requièrent habituellement l'utilisation de circuits analogiques plus onéreux et moins compacts.

**Revendications**

1. Procédé de décodage de données binaires à partir d'une séquence de transitions d'un signal représentant lesdites données, ainsi que des informations d'horloge, codées en phase ou en modulation de fréquence, respectivement, l'intervalle de temps séparant deux transitions consécutives quelconques dudit signal étant soit long, soit court, ledit procédé étant caractérisé en ce qu'il comporte les étapes qui consistent a:

détecter l'apparition de chaque transition du signal (ECHANT),

engendrer une première impulsion (LONG) en réponse seulement à chaque détection d'une intervalle de temps long entre deux transitions du signal,

engendrer un signal (DECAL 1) indiquant la détection d'une transition de donnée ou d'une transition d'horloge, respectivement, en réponse à l'apparition de deux premières impulsions consécutives et en l'absence de toute transition du signal entre lesdites deux premières impulsions,

engendrer un signal (DECAL 2) indiquant la détection d'une transition de donnée ou d'une transition d'horloge, respectivement, en réponse à l'apparition de deux premières impulsions séparées par un nombre pair de transitions du signal,

engendrer un signal (CHARGE) indiquant la détection d'une transition de donnée ou d'une transition d'horloge, respectivement, en réponse à l'apparition d'un nombre pair de transitions du signal, faisant suite à la transition de données ou d'horloge précédente, et en l'absence de ladite première impulsion pendant l'intervalle de temps entre ladite transition de donnée ou d'horloge précédente et la dernière transition dudit nombre pair de transitions.

2. Procédé selon la revendication 1 caractérisé en ce que ladite étape qui consiste à engendrer ladite première impulsion comporte les sous-étapes qui consistent à:

comparer l'intervalle de temps entre deux transitions du signal consécutives avec un temps de référence et

engendrer ladite première impulsion lorsque ledit intervalle de temps est égal ou supérieur audit temps de référence.

3. Procédé selon la revendication 1 caractérisé en ce que ladite étape qui consiste à engendrer ladite première impulsion comporte les sous-étapes qui consistent à:

comparer l'intervalle de temps entre deux transitions du signal consécutives avec l'intervalle de temps entre la première de ces deux transitions consécutives et la transition qui la précède immédiatement et

engendrer ladite première impulsion lorsque l'intervalle de temps entre lesdites deux transitions consécutives est au moins égal aux 3/2 dudit intervalle de temps entre la première des deux transitions consécutives et la transition qui la précède immédiatement et lorsque ce dernier intervalle de temps est court.

4. Procédé selon la revendication 3 caractérisé en ce que lorsque les données binaires sont codées en modulation de fréquence, il comporte les étapes qui consistent à:

délivrer un ''0'', représentant la valeur de la donnée décodée, en réponse à la détection d'une transition du signal et à la présence d'un niveau haut d'une première impulsion si aucune autre transition n'a été détectée ou si un nombre pair de transitions du signal ont été détectées depuis la fin de la première impulsion antérieurement engendrée,

délivrer un ''1'', représentant la valeur de la donnée décodée, en réponse à la détection d'une transition du signal, si un nombre impair de transitions additionnelles ont été détectées depuis la fin du niveau haut de la plus récente première impulsion.

5. Procédé de décodage de données binaires à partir d'une séquence de transitions d'une signal, représentant lesdites données codées en modulation de fréquence modifiée, l'intervalle de temps entre deux transitions consécutives étant long, moyen ou court, caractérisé en ce qu'il comporte les étapes qui consistent à:

détecter l'apparition de chaque transition du signal,

engendrer une première impulsion en réponse seulement à chaque détection d'un intervalle de temps long entre deux desdites transitions,

engendrer une deuxième impulsion en réponse seulement à la détection d'un intervalle de temps moyen entre deux desdites transitions,

engendrer un troisième signal indiquant la détection d'une transition, lorsqu'un nombre pair de deuxièmes impulsions a été engendré depuis la première impulsion précédemment engendrée,

engendrer un quatrième signal en réponse à la détection d'un intervalle de temps court entre les transitions ou d'une deuxième impulsion, lorsqu'un nombre impair de deuxièmes impulsions ont éte engendrées depuis la première impulsion précédemment engendrée,

délivrer un "1", représentant la valeur de la donnée decodée, en réponse audit troisième signal lorsque la transition faisant suite audit troisième signal apparaît au cours d'un intervalle de temps court après ledit troisième signal,

délivrer un "0", représentant la valeur de la donnée décodée, en réponse audit troisième signal, lorsqu'une deuxième impulsion suit ledit troisième signal,

délivrer un "0" suivi d'un "1", représentant les valeurs des données décodées, en réponse audit troisième signal, lorsqu'une première impulsion suit ledit troisième signal,

délivrer un "0", représentant la valeur de la donnée décodée, en réponse audit quatrième signal, lorsque la transition qui suit ledit quatrième signal apparaît au cours d'un intervalle de temps court après ledit quatrième signal et

délivrer un "0" suivi d'un "1", représentant les valeurs des données décodées, en réponse audit quatrième signal, lorsqu'une seconde impulsion suit le quatrième signal.

**Patentansprüche**

1. Dekodierverfahren für binäre Daten ausgehend von einer die genannten Daten darstellenden Folge von Übergängen eines Signals, sowie von den jeweils in Phase oder in Frequenzmodulation kodierten Taktinformationen, wobei der zwei aufeinanderfolgende beliebige Übergänge des genannten Signals trennende Zeitraum entweder lang oder kurz ist, wobei das genannte Verfahren dadurch gekennzeichnet ist, daß es die folgenden Verfahrensschritte enthält:

Erkennung des Auftretens eines jeden Überganges des Signals (ECHANT),

Erzeugung eines ersten Impulses (LONG) als Reaktion lediglich auf jede Erfassung eines langen Zeitraums zwischen zwei Übergängen des Signals.

Erzeugung eines die Erfassung eines Datenübergangs oder eines Taktübergangs anzeigenden Signals (DECAL 1), jeweils als Reaktion auf das Auftreten von zwei aufeinanderfolgenden ersten Impulsen und in Abwesenheit jeglicher Übergänge des Signals zwischen den genannten zwei ersten Impulsen,

Erzeugung eines die Erfassung eines Datenübergangs oder eines Taktübergangs anzeigenden Signals (DECAL 2), jeweils als Reaktion auf das Auftreten von zwei ersten, durch eine geradzahlige Anzahl von Übergängen des Signals getrennten Impulsen,

Erzeugung eines die Erfassung eines Datenübergangs oder eines Taktübergangs anzeigenden Signals (CHARGE), jeweils als Reaktion auf das Auftreten einer geradzahligen Anzahl von Signalübergängen, folgend auf den vorhergehenden Daten- oder Taktübergang, und in Abwesenheit des genennten ersten Impulses während des Zeitraums zwischen dem genannten vorhergehenden Daten- oder Taktübergang und dem letzten Übergang der genannten geradzahligen Anzahl von Übergängen.

2. Verfahren nach Patentanspruch 1, dadurch gekennzeichnet, daß der genannte Verfahrensschritt, der in der Erzeugung des genannten ersten Impulses besteht, folgende Teilschritte enthält:

Vergleich des Zeitraums zwischen zwei aufeinanderfolgenden Signalübergängen mit einer Vorgabezeit und

Erzeugung des genannten ersten Impulses, wenn der genannte Zeitraum gleich oder größer als die genannte Vorgabezeit ist.

3. Verfahren nach Patentanspruch 1, dadurch gekennzeichnet, daß der genannte Verfahrensschritt, der in der Erzeugung des genannten ersten Impulses besteht, folgende Teilschritte enthält:

Vergleich des Zeitraums zwischen zwei aufeinanderfolgenden Übergängen des Signals mit dem Zeitraum zwischen dem ersten dieser beiden aufeinanderfolgenden Übergänge und dem Übergang, der ihm unmittelbar vorhergeht und

Erzeugung des genannten ersten Impulses, wenn der Zeitraum zwischen den beiden genannten aufeinanderfolgenden Übergängen zumindest gleich 3/2 des genannten Zeitraums zwischen dem ersten der beiden aufeinanderfolgenden Übergänge und dem ihm unmittelbar vorhergehenden Übergang ist und wenn dieser letzte Zeitraum kurz ist.

4. Verfahren nach Patentanspruch 3, dadurch gekennzeichnet, daß es, wenn die binären Daten in Frequenzmodulation kodiert sind, die folgenden Verfahrensschritte enthält:

Abgage einer "0", die den Wert des dekodierten Datenelements darstellt, als Reaktion auf die Erfassung eines Übergangs des Signals und auf das Vorhandensein eines H-Zustandes eines ersten Impulses, wenn kein weiterer Übergang erkannt wurde oder wenn eine geradzahlige Anzahl von Übergängen des Signals seit dem Ende des ersten vorher erzeugten Impulses erkannt wurde,

Abgabe einer "1", die den Wert des dekodierten Datenelements darstellt, als Reaktion auf die Erfassung eines Übergangs des Signals, wenn eine geradzahlige Anzahl zusätzlicher Übergänge seit dem Ende des H-Zustandes des neuesten ersten Impulses erkannt worden ist.

5. Dekodierverfahren für binäre Daten, ausgehend von einer die genannten, in modifizierter Frequenzmodulation kodierten Daten

darstellenden Folge von Übergängen eines Signals wobei der Zeitraum zwischen zwei aufeinanderfolgenden Übergängen lang, mittelgroß oder kurz ist, dadurch gekennzeichnet, daß es die folgenden Verfahrensschritte enthält:

Erfassung des Auftretens eines jeden Übergangs des Signals,

Erzeugung eines ersten Impulses als Reaktion lediglich auf jede Erfassung eines langen Zeitraums zwischen zwei der genannten Übergänge,

Erzeugung eines zweiten Impulses als Reaktion lediglich auf die Erfassung eines mittelgroßen Zeitraums zwischen zwei der genannten Übergänge,

Erzeugung eines dritten, die Erkennung eines Übergangs anzeigenden Signals, wenn eine geradzahlige Anzahl von zweiten Impulsen seit dem ersten vorhergehend erzeugten Impuls erzeugt worden ist,

Erzeugung eines vierten Signals als Reaktion auf die Erfassung eines kurzen Zeitraums zwischen den Übergängen oder eines zweiten Impulses, wenn seit dem ersten vorhergehend erzeugten Impuls eine ungeradzahlige Anzahl von zweiten Impulsen erzeugt worden ist,

Abgabe einer "1", die den Wert des dekodierten Datenelements darstellt, als Reaktion auf das genannte dritte Signal, wenn der auf des genannte dritte Signal folgende Übergang im Verlauf eines kurzen Zeitraums nach dem genannten dritten Signal auftritt,

Abgabe einer "0", die den Werte des dekodierten Datenelements darstellt, als reaktion auf das genannte dritte Signal, wenn ein zweiter Impuls dem genannten dritten Signal folgt,

Abgabe einer "0" gefolgt von einer "1", welche die Werte der dekodierten Daten darstellen, als Reaktion auf das genannte dritte Signal, wenn ein erster Impuls dem genanten dritten Signal folgt,

Abgabe einer "0", die den Wert des dekodierten Datenelements darstellt, als Reaktion auf das genannte vierte Signal, wenn der Übergang, der dem genannten vierten Signal folgt, im Verlaufe eines kurzen Zeitraums nach dem genannten vierten Signal auftritt, und

Abgabe einer "0" gefolgt von einer "1", welche die Werte der dekodierten Daten darstellen, als Reaktion auf das genannte vierte Signal, wenn ein zweiter Impuls dem vierten Signal folgt.

## Claims

1. A method of decoding binary data from a sequence of signal transitions representing said data, as well as clock information, encoded by phase encoding or frequency modulation, respectively, the time interval separating any two consecutive of said signal transitions being either long, or short, said method being characterized in that it includes the following steps:

detecting the occurrence of each signal transition (ECHANT),

generating a first pulse (LONG) in response only to each detection of a long time interval between two signal transitions,

generating a signal (DECAL 1) indicative of the detection of a data transition or a clock transition, respectively, in response to the occurrence of two consecutive first pulses and in the absence of any of said signal transitions between said two initial pulses,

generating a signal (DECAL 2) indicative of the detection of a data transition or a clock transition, respectively, in response to the occurrence of two first pulses separated by an even number of signal transitions,

generating a signal (CHARGE) indicative the detection of a data transition or a clock transition, respectively, in response to the occurrence of an even number of signal transitions subsequent to the previous data transition or clock transition, and the absence of said first pulse during the time interval between said previous data transition or clock transition and the last of said even number of signal transitions.

2. A method according to claim 1 characterized in that said step of generating said first pulse includes the following sub-steps:

comparing the time interval between two consecutive signal transitions to a reference time and

generating said first pulse when said time interval is equal to or greater than said reference time.

3. A method according to claim 1 characterized in that said step of generating said first pulse includes the following sub-steps:

comparing the time interval between two consecutive signal transitions to the time interval between the first of said two consecutive signal transitions and the signal transition that immediately precedes it and

generating said first pulse when the time interval between said two consecutive transitions is at least equal to 3/2 of said time interval between the first of the two consecutive signal transitions and the transition that immediately precedes it and when this latter time interval is short.

4. A method according to claim 3 characterized in that, when the binary data is encoded by frequency modulation, it includes the following steps:

outputting a '0', representing the value of the decoded data, in response to the detection of a signal transition and to the presence of an active level of a first pulse if no other, or an even number of signal transitions have been detected since the end of the last first pulse,

outputting a '1', representing the value of the decoded data, in response to the detection of a signal transition, if an odd number of additional transitions have been detected since the end of the active level of the most recent first pulse.

5. A method of decoding binary data from a sequence of signal transitions, representing said data encoded by modified frequency modulation encoding wherein, the time interval between any two consecutive signal transitions is either long, middle or short, characterized in that it includes the following steps:

detecting the occurrence of each of said signal transitions,

generating a first pulse in response only to each detection of a long time interval between two of said signal transitions,

generating a second pulse uniquely in response only to the detection of a middle time interval between two of said signal transitions,

generating a third signal indicative of the detection of a transition, when an even number of second pulses have been generated since the last first pulse,

generating a fourth signal in response to the detection of a short time interval between the transitions or of a second pulse, whenever an odd number of second pulses have been generated since the last first pulse,

outputting a '1', representing the value of the decoded data, in response to said third signal when the transition following said third signal occurs during a short time interval after said third signal,

outputting a '0', representing the value of the decoded data, in response to said third signal, when a second pulse follows said third signal,

outputting a '0' followed by a '1', representing the values of the decoded data, in response to said third signal, when a first pulse follows said third signal,

outputting a '0', representing the value of the decoded data, in response to said fourth signal, when the transition following said fourth signal occurs during a short time interval after said fourth signal and

outputting a '0' followed by a '1', representing the values of the decoded data, in response to said fourth signal, when a second pulse follows the fourth signal.

O 012 880

FIG. 1

FIG. 2

FIG. 3

FIG.4

FIG.5

FIG. 6

FIG. 7